# EUROPEAN PATENT APPLICATION

(11) **EP 4 788 009 A1**
(43) Date of publication of application: **05.08.2026**
(21) Application number: 23953565.1
(22) Date of filing: 27.09.2023
(51) Int. Cl.: H04W 72/12

(54) **METHOD FOR DELAY STATUS REPORTING, TERMINAL, NETWORK DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LI, Yanhua, Beijing 100085 (CN); JIANG, Xiaowei, Beijing 100085 (CN)
(74) Representative: Dehns Germany Partnerschaft mbB
(86) International application number: PCT/CN2023/122303
(87) International publication number: WO 2025/065413

(57) **Abstract**

Embodiments of the present disclosure provide a method for delay status reporting, a terminal, a network device, a communication system, and a storage medium. The method is executed by a terminal, and the method comprises: determining first information of delay status reporting (DSR) for a packet data convergence protocol (PDCP) layer, the first information indicating a first data volume, and the first data volume being the data volume of a data packet to be transmitted having a remaining time less than or equal to a time threshold value. Thus, a communication mechanism adapted to DSR may be implemented.

## Description

### TECHNICAL FIELD

The present disclosure relates to the field of communication technology, and in particular to a method for delayed status reporting, a terminal, a network device, a communication system, and a storage medium.

### BACKGROUND

In the field of communication technology, it has introduced a Delay Status Reporting (DSR) mechanism in order for a network to be aware of status of data packets to be transmitted. A terminal reports delay information of data transmission to the network via DSR.

### SUMMARY

With the introduction of the DSR mechanism, information carried in the DSR is an issue that needs to be considered.

The embodiments of the present disclosure provides a terminal, a network device, a communication system, and a storage medium.

According to a first aspect of the embodiments of the present disclosure, a method for delay status reporting is provided, the method being performed by a terminal, and the method including:
determining first information for Delay Status Reporting (DSR) of a Packet Data Convergence Protocol (PDCP) layer;
where the first information indicates a first data volume, and the first data volume is a data volume of a data packet to be transmitted that has a remaining time less than or equal to a time threshold.

According to a second aspect of the embodiments of the present disclosure, a method for delay status reporting is provided, the method being performed by a network device, and the method including:
receiving first information sent by a terminal;
where the first information is information determined for Delay Status Reporting (DSR) of a Packet Data Convergence Protocol (PDCP) layer; the first information indicates a first data volume; and the first data volume is a data volume of a data packet to be transmitted that has a remaining time less than or equal to a time threshold.

According to a third aspect of the embodiments of the present disclosure, a method for delay status reporting is provided, the method including:
sending, by a terminal, first information to a network device;
where the first information is information determined for Delay Status Reporting (DSR) of a Packet Data Convergence Protocol (PDCP) layer; the first information indicates a first data volume; and the first data volume is a data volume of a data packet to be transmitted that has a remaining time less than or equal to a time threshold.

According to a fourth aspect of the embodiments of the present disclosure, a terminal is provided, the terminal including:
a processing module, configured to:
determine first information for Delay Status Reporting (DSR) of a Packet Data Convergence Protocol (PDCP) layer;
where the first information indicates a first data volume, and the first data volume is a data volume of a data packet to be transmitted that has a remaining time less than or equal to a time threshold.

According to a fifth aspect of the embodiments of the present disclosure, a network device is provided, the network device including:
a transceiver module, configured to:
receive first information sent by a terminal;
where the first information is information determined for Delay Status Reporting (DSR) of a Packet Data Convergence Protocol (PDCP) layer; the first information indicates a first data volume; and the first data volume is a data volume of a data packet to be transmitted that has a remaining time less than or equal to a time threshold.

According to a sixth aspect of the embodiments of the present disclosure, a communication system is provided, where the communication system includes a terminal and an access network device, the terminal is configured to implement the communication method provided in the first aspect, and the access network device is configured to implement the communication method provided in the second aspect.

According to a seventh aspect of the embodiments of the present disclosure, a terminal is provided, where the terminal includes:
a memory, including executable instructions; and
one or more processors;
where the executable instructions, when being executed by the processors, cause the terminal to perform the communication method provided in the first aspect.

According to an eighth aspect of the embodiments of the present disclosure, a network device is provided, where the network device includes:
a memory, including executable instructions; and
one or more processors;
where the executable instructions, when being executed by the processors, cause the network device to perform the communication method provided in the second aspect.

According to a ninth aspect of the embodiments of the present disclosure, a storage medium is provided, where the storage medium stores instructions that, when being executed on a communication device, cause the communication device to perform the communication method provided in the first aspect, the second aspect, or the third aspect.

The technical solutions provided in the embodiments of the present disclosure can enable explicit determination of information in the DSR.

It should be understood that the foregoing general description and the following detailed description are illustrative and explanatory only and are not intended to limit the embodiments of the present disclosure.

### BRIEF DESCRIPTION OF THE DRAWINGS

The accompanying drawings, which are incorporated in and form part of this specification, illustrate embodiments consistent with the present disclosure and, together with the description, serve to explain the principles of the embodiments of the present disclosure.
FIG. 1a is a schematic diagram illustrating an architecture of a communication system according to an illustrative embodiment;
FIG. 2a is a schematic flowchart illustrating a method for delay status reporting according to an illustrative embodiment;
FIG. 3a is a schematic flowchart illustrating a method for delay status reporting according to an illustrative embodiment;
FIG. 3b is a schematic flowchart illustrating a method for delay status reporting according to an illustrative embodiment;
FIG. 4a is a schematic flowchart illustrating a method for delay status reporting according to an illustrative embodiment;
FIG. 4b is a schematic flowchart illustrating a method for delay status reporting according to an illustrative embodiment;
FIG. 5a is a schematic flowchart illustrating a method for delay status reporting according to an illustrative embodiment;
FIG. 6a is a schematic diagram illustrating a structure of a network device according to an illustrative embodiment;
FIG. 6b is a schematic diagram illustrating a structure of a terminal according to an illustrative embodiment;
FIG. 7a is a schematic diagram illustrating a structure of a UE according to an illustrative embodiment;
FIG. 7b is a schematic diagram illustrating a structure of a communication device according to an illustrative embodiment.

### DETAILED DESCRIPTION

The embodiments of the present disclosure provide a method for delay status reporting, a terminal, a network device, a communication system, and a storage medium.

In a first aspect, the embodiments of the present disclosure provide a method for delay status reporting, the method being performed by a terminal, and the method including:
determining first information for Delay Status Reporting (DSR) of a Packet Data Convergence Protocol (PDCP) layer;
where the first information indicates a first data volume; and the first data volume is a data volume of a data packet to be transmitted that has a remaining time less than or equal to a time threshold.

In the above embodiments, since the first information indicates the first data volume of the data packet to be transmitted having the remaining time less than or equal to the time threshold, the network device can accurately obtain the first data volume after receiving the first information, thereby enabling more accurate scheduling of subsequent data.

In conjunction with the embodiments of the first aspect described above, in some embodiments, the first data volume is the data volume of the data packet to be transmitted that has the remaining time less than or equal to the time threshold and that is determined from an associated data packet to be transmitted.

In the above embodiments, the first data volume can be accurately determined based on the associated data packet to be transmitted, thereby enabling more accurate scheduling of subsequent data.

In conjunction with the embodiments of the first aspect described above, in some embodiments, the associated data packet to be transmitted is a data packet to be transmitted determined based on a packet set, the packet set including at least one data packet to be transmitted.

In the above embodiments, the associated data packet to be transmitted is explicitly defined.

In conjunction with the embodiments of the first aspect described above, in some embodiments, the method includes one of the following:
determining the associated data packet to be transmitted based on protocol rule information; and
determining the associated data packet to be transmitted based on network configured information.

In the above embodiments, the associated data packet can be determined based on the protocol rule information or network configured information, making the determination method more flexible.

In conjunction with the embodiments of the first aspect described above, in some embodiments, determining the associated data packet to be transmitted based on the protocol rule includes:
determining that a remaining time of a first data packet to be transmitted in a packet set is less than or equal to the time threshold, and determining that all data packets to be transmitted in the packet set to which the first data packet to be transmitted belongs are the associated data packets to be transmitted.

In the above embodiments, the associated data packets to be transmitted can be determined based on different protocol rule information, making the determination method more flexible.

In conjunction with the embodiments of the first aspect described above, in some embodiments, determining the associated data packet to be transmitted based on the network configured information includes:
receiving second information sent by the network device; and
determining the associated data packet to be transmitted based on the second information.

In the above embodiments, the network device can directly send to the terminal the second information used for determining the associated data packet to be transmitted.

In conjunction with the embodiments of the first aspect described above, in some embodiments, the second information indicates one of the following:
a remaining time of a first data packet to be transmitted in a packet set is less than or equal to the time threshold, and all data packets to be transmitted in the packet set to which the first data packet to be transmitted belongs are the associated data packets to be transmitted; and
the remaining time of the first data packet to be transmitted in the packet set is less than or equal to the time threshold, and the first data packet to be transmitted is the associated data packet to be transmitted.

In the above embodiments, the associated data packet to be transmitted in different scenarios can be indicated, making the indication method more flexible.

In conjunction with the embodiments of the first aspect described above, in some embodiments, the method further includes:
determining that the network configures a packet-set-based packet discarding mode, and determining that the protocol rule information and/or the network configured information take effect.

In the above embodiments, the method for the protocol rule information and/or the network configured information to take effect is specified.

In conjunction with the embodiments of the first aspect described above, in some embodiments, the method further includes:
sending the first information to the network device.

In the above embodiments, the network device can receive the first information.

In conjunction with the embodiments of the first aspect described above, in some embodiments, the associated data packet to be transmitted is a PDCP Service Data Unit (SDU) and/or a PDCP Packet Data Unit (PDU) associated with a PDCP SDU.

In the above embodiments, the construction of the associated data packet is more diverse.

In a second aspect, the embodiments of the present disclosure provide a method for delay status reporting, the method being performed by a network device, and the method including:
receiving first information sent by a terminal;
where the first information is information determined for Delay Status Reporting (DSR) of a Packet Data Convergence Protocol (PDCP) layer; the first information indicates a first data volume; the first data volume is a data volume of a data packet to be transmitted that has a remaining time less than or equal to a time threshold; and the remaining time is the time remaining until the data packet to be transmitted is discarded in a logical channel.

In conjunction with the embodiments of the second aspect described above, in some embodiments, the first data volume is the data volume of the data packet to be transmitted that has the remaining time less than or equal to the time threshold and that is determined from an associated data packet to be transmitted.

In conjunction with the embodiments of the second aspect described above, in some embodiments, the method further includes:
sending second information to the terminal;
where the second information is used to determine the associated data packet to be transmitted.

In conjunction with the embodiments of the second aspect described above, in some embodiments, the second information indicates one of the following:
the remaining time of a first data packet to be transmitted in a packet set is less than or equal to the time threshold, and all data packets to be transmitted in the packet set to which the first data packet to be transmitted belongs are the associated data packets to be transmitted; and
the remaining time of the first data packet to be transmitted in the packet set is less than or equal to the time threshold, and the first data packet to be transmitted is the associated data packet to be transmitted.

In a third aspect, the embodiments of the present disclosure provide a method for delay status reporting, the method including:
sending, by a terminal, first information to a network device;
where the first information is information determined for Delay Status Reporting (DSR) of a Packet Data Convergence Protocol (PDCP) layer; the first information indicates a first data volume; and the first data volume is a data volume of a data packet to be transmitted that has a remaining time less than or equal to a time threshold.

In a fourth aspect, the embodiments of the present disclosure provide a terminal, the terminal including:
a processing module, configured to:
determine first information for delay status reporting (DSR) of a Packet Data Convergence Protocol (PDCP) layer;
where the first information indicates a first data volume; and the first data volume is a data volume of a data packet to be transmitted that has a remaining time less than or equal to a time threshold.

In a fifth aspect, the embodiments of the present disclosure provide a network device, the network device including:
a transceiver module, configured to:
receive first information sent by a terminal;
where the first information is information determined for Delay Status Reporting (DSR) of a Packet Data Convergence Protocol (PDCP) layer; the first information indicates a first data volume; and the first data volume is a data volume of a data packet to be transmitted that has a remaining time less than or equal to a time threshold.

In a sixth aspect, the embodiments of the present disclosure provide a communication system, where the communication system includes a terminal and a network device, the terminal is configured to implement the communication method described in the optional implementations of the first aspect, and the network device is configured to implement the communication method described in the optional implementations of the second aspect.

In a seventh aspect, the embodiments of the present disclosure provide a terminal, the terminal including:
a memory, including executable instructions; and
one or more processors;
where the executable instructions, when being executed by the processors, cause the terminal to perform the communication method described in the optional implementations of the first aspect.

In an eighth aspect, the embodiments of the present disclosure provide a network device, the network device including:
a memory, including executable instructions; and
one or more processors;
where the executable instructions, when being executed by the processors, cause the network device to perform the communication method described in the optional implementations of the second aspect.

In a ninth aspect, the embodiments of the present disclosure provide a storage medium storing instructions that, when running on a communication device, cause the communication device to perform the communication method described in the optional implementations of the first, second, or third aspect.

In a tenth aspect, the embodiments of the present disclosure provide a program product that, when being executed by a communication device, causes the communication device to perform the communication method described in the optional implementations of the first, second, or third aspect.

In an eleventh aspect, the embodiments of the present disclosure provide a computer program that, when running on a computer, causes the computer to perform the communication method described in the optional implementations of the first, second, or third aspect.

It can be understood that the aforementioned terminal, network device, communication system, storage medium, program product, and computer program are all used to perform the methods provided in the embodiments of the present disclosure. Therefore, for the beneficial effects that can be achieved thereby, reference can be made to the beneficial effects in the corresponding methods, which will not be repeated here.

The embodiments of the present disclosure provide a communication method, a terminal, a network device, a communication system, and a storage medium. In some embodiments, the terms "communication method", "information processing method", "information transmission method", etc., can be used interchangeably.

The embodiments of the present disclosure are not exhaustive, but are merely illustrative of some embodiments, and are not intended to limit the scope of protection of the present disclosure. Each step in a certain embodiment can be implemented as an independent embodiment and the steps can be arbitrarily combined if there is no contradiction. For example, a solution with some steps in a certain embodiment removed can also be implemented as an independent embodiment, and the order of the steps in a certain embodiment can be arbitrarily exchanged. In addition, the optional implementations in a certain embodiment can be arbitrarily combined, and furthermore, the embodiments can be arbitrarily combined. For example, some or all steps of different embodiments can be arbitrarily combined, and a certain embodiment can be arbitrarily combined with the optional implementations of other embodiments.

In the embodiments of the present disclosure, if there is no special indication or logical conflict, the terms and/or descriptions among the embodiments are consistent and can be referenced by each other, and the technical features in different embodiments can be combined to form a new embodiment based on their inherent logical relationships.

The terminology used in the embodiments of the present disclosure is for the purpose of describing specific embodiments only and is not intended to limit the present disclosure.

In the embodiments of the present disclosure, unless otherwise specified, elements expressed in the singular form, such as "a", "an", "the", "above", "said", "foregoing", "this", etc., may mean "one and only one", or "one or more", "at least one", etc. For example, in the cases where articles such as "a", "an", or "the" in English are used in translation, the noun following the article may be understood as a singular expression form or a plural expression form.

In the embodiments of the present disclosure, "a plurality of" refers to two or more.

In some embodiments, the terms such as "at least one of", "one or more", "a plurality of", and "multiple" can be used interchangeably.

In some embodiments, descriptions such as "at least one of A or B", "A and/or B", "in one case, A, and in another case, B", or "in response to one case, A, and in response to another case, B" can include the following technical solutions depending on the situation: in some embodiments, A (executing A independently of B); in some embodiments, B (executing B independently of A); in some embodiments, selecting from A and B and executing (A and B being selectively executed); and in some embodiments, A and B (executing both A and B). The same applies when there are more branches, such as A, B, C, etc.

In some embodiments, descriptions such as "A or B" may include the following technical solutions depending on the situation: in some embodiments, A (executing A independently of B); in some embodiments, B (executing B independently of A); and in some embodiments, selecting from A and B and executing (A and B being selectively executed). The same applies when there are more branches such as A, B, C, etc.

The prefixes such as "first" and "second" in the embodiments of the present disclosure are merely used to distinguish between different description objects and do not constitute any restriction on the position, order, priority, quantity, or content of the description objects. For the statement of the description object, please refer to the description in the context of the claims or embodiments, and no unnecessary restriction should be constituted due to the use of the prefixes. For example, if the description object is a "field", the ordinal number before the "field" in the "first field" and the "second field" does not limit the position or order between the "fields". "First" and "second" do not limit whether the "fields" modified by them are in the same message or not, nor do they limit the order of the "first field" and the "second field". For another example, if the description object is a "level", the ordinal number before the "level" in the "first level" and the "second level" does not limit the priority between the "levels". For another example, the number of the description objects is not limited by the ordinal number and can be one or more. Taking "first device" as an example, the number of "devices" can be one or more. In addition, the objects modified by different prefixes can be the same or different. For example, if the description object is "device", then the "first device" and the "second device" can be the same device or different devices, and their types can be the same or different; for another example, if the description object is "information", then the "first information" and the "second information" can be the same information or different information, and their contents can be the same or different.

In some embodiments, "including A", "containing A", "for indicating A", and "carrying A" can be interpreted as directly carrying A or indirectly indicating A.

In some embodiments, terms such as "...", "determining...", "in the case of...", "at the time of...", "when", "if ...", "provided...", etc. can be used interchangeably.

In some embodiments, the terms such as "greater than", "greater than or equal to", "not smaller than", "more than", "more than or equal to", "not less than", "higher than", "higher than or equal to", "not lower than", and "above" can be used interchangeably, and terms such as "smaller than", "smaller than or equal to", "not greater than", "less than", "less than or equal to", "not more than", "lower than", "lower than or equal to", "not higher than", and "below" can be used interchangeably.

In some embodiments, the apparatus, etc., can be interpreted as physical or virtual, their names are not limited to the names described in the embodiments, and the terms such as "apparatus", "equipment", "device", "circuit", "network element", "node", "function", "unit", "section", "system", "network", "chip", "chip system", "entity", and "subject" can be used interchangeably.

In some embodiments, "network" can be interpreted as apparatuses included in the network, such as an access network device, a core network device, etc.

In some embodiments, the terms "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", and "bandwidth part (BWP)" can be used interchangeably.

In some embodiments, the terms such as "terminal", "terminal device", "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", and "client" can be used interchangeably.

In some embodiments, the access network device, core network device, or network device can be replaced by a terminal. For example, the embodiments of the present disclosure can also be applied to structures where communication between the access network device, core network device, or network device and the terminal is replaced by communication between multiple terminals (e.g., device-to-device (D2D), vehicle-to-everything (V2X), etc.). In this case, the structure can also be configured such that the terminal has all or part of the functions of the access network device. Furthermore, the terms such as "uplink" and "downlink" can be replaced with terms corresponding to communication between terminals (e.g., "sidelink"). For example, uplink channel, downlink channel, etc., can be replaced with sidelink channel, and uplink link, downlink, etc., can be replaced with sidelink link.

In some embodiments, the terminal may be replaced by an access network device, a core network device, or a network device. In this case, the structure can also be configured such that the access network device, core network device, or network device has all or some of the functions of the terminal.

In some embodiments, obtaining data, information, etc. may comply with the laws and regulations of the country where the obtaining is performed.

In some embodiments, data, information, etc., may be obtained with the user's consent.

Furthermore, each element, each row, or each column in the table of the embodiments of the present disclosure can be implemented as an independent embodiment, and a combination of any element, any row, or any column can also be implemented as an independent embodiment.

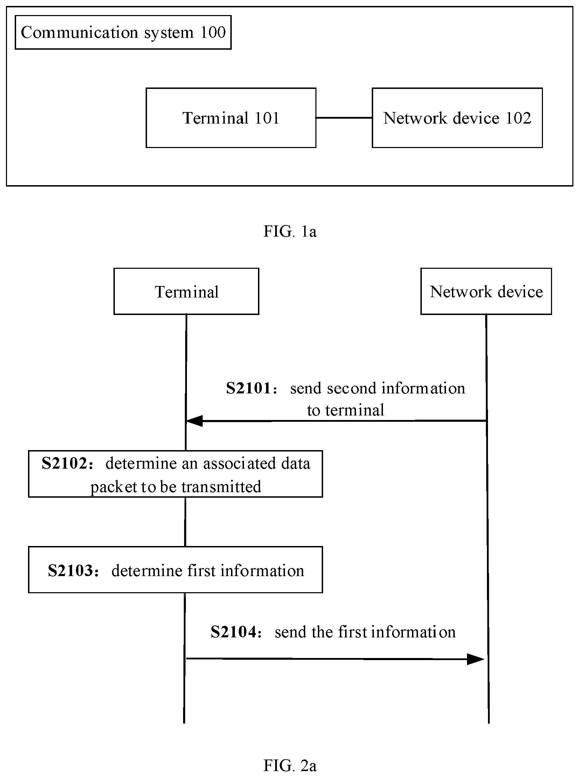

FIG. 1a is a schematic diagram illustrating an architecture of a communication system according to an embodiment of the present disclosure.

As shown in FIG. 1a, the communication system 101 includes a terminal and a network device 102.

In some embodiments, the network device 102 may be an access network device or a core network device.

In some embodiments, the terminal includes, but is not limited to, at least one of the following: a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home.

In some embodiments, the access network device is, for example, a node or device that accesses a terminal to a wireless network. The access network device may include, but is not limited to, at least one of the following: an evolved Node B (eNB) in a 5G communication system, a next-generation evolved Node B (ng-eNB), a next-generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open RAN, a cloud RAN, a base station in other communication systems, and an access node in a Wi-Fi system.

In some embodiments, the technical solutions of the present disclosure can be applied to the Open RAN architecture. In this case, the interfaces between or within access network devices involved in the embodiments of the present disclosure can be changed into internal interfaces of the Open RAN, and the processes and information interactions between these internal interfaces can be implemented through software or programs.

In some embodiments, the access network device may be formed of a central unit (CU) and a distributed unit (DU), where the CU may also be referred to as a control unit. The CU-DU structure may be used to separate the protocol layers of the access network device, with some functions of the protocol layers being placed in and centrally controlled by the CU and some or all of the remaining functions of the protocol layers being distributed in the DUs and the DUs are centrally controlled by the CU, but it is not limited thereto.

In some embodiments, the core network device may be a single device including a first network element, or it may be multiple devices or a group of devices, each including a first network element. The network element may be virtual or physical. The core network may include, for example, at least one of an Evolved Packet Core (EPC), a 5G Core Network (5GCN), or a Next Generation Core (NGC).

It can be understood that the communication system in the embodiments of the present disclosure is described for the purpose of more clearly illustrating the technical solutions of the embodiments of the present disclosure, and does not constitute a limitation on the technical solutions proposed in the embodiments of the present disclosure. As those skilled in the art would know, with the evolution of system architecture and the emergence of new business scenarios, the technical solutions proposed in the embodiments of the present disclosure are also applicable to similar technical problems.

The embodiments of the present disclosure described below can be applied to the communication system 100 shown in FIG. 1a, or to some of the subjects, but are not limited thereto. The subjects shown in FIG. 1a are illustrative. The communication system may include all or some of the subjects in FIG. 1a, or it may include subjects other than those in FIG. 1a. The number and configuration of the subjects are arbitrary, the subjects may be physical or virtual, and the connection relationship between the subjects is illustrative. The subjects may not be connected or may be connected, and the connection can be in any way, which may be a direct connection or an indirect connection, a wired connection or a wireless connection.

The embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-Wideband (UWB), Bluetooth (registered trademark), Public Land Mobile Network (PLMN) networks, Device-to-Device (D2D) systems, Machine-to-Machine (M2M) systems, Internet of Things (IoT) systems, Vehicle-to-Everything (V2X) systems, systems utilizing other communication methods, next-generation systems extended based upon them, etc. Furthermore, a combination of multiple systems (e.g., a combination of LTE or LTE-A with 5G) can be applied.

In some embodiments, the fifth-generation mobile communication technology (5G) has been introduced due to pursuit of speed, latency, high-speed mobility, energy efficiency, and the increasing diversity and complexity of services in future life. The main application scenarios of 5G are: enhanced mobile broadband (eMBB), ultra-reliable and low latency communications (URLLC), and massive machine type communication (mMTC). The eMBB still aims to provide users with multimedia content, services, and data, and its demand is growing rapidly. On the other hand, because eMBB may be deployed in different scenarios, such as indoors, urban areas, and rural areas, its capabilities and needs vary considerably, so it cannot be discussed in generalization; a detailed analysis based on the specific deployment scenarios is necessary. Typical applications of URLLC include: industrial automation, power automation, remote medical operations (surgery), and transportation safety assurance. Typical characteristics of mMTC include: high connection density, small data volume, latency-insensitive services, and low cost and long lifespan of modules.

In multimodal services, data typically consists of multiple Quanlity of Service (QoS) flows, corresponding to a very large volume of traffic. The multimodal traffic flows need to meet certain latency requirements in the transmission process, especially some data flows need to arrive at the server simultaneously so as to be decoded, and delay in any one data flow would result in failure of joint decoding of the multiple flows. However, scheduling by the network is dynamic. Therefore, in some cases, even if some data flows belong to low-priority logical channels, if some packets have not been scheduled for a long time, a Buffer Status Report (BSR) needs to be sent to notify the network as quickly as possible. However, according to relevant mechanisms, the BSR can only be sent when data of the high-priority logical channel arrives, which cannot meet the needs of emergency scheduling. Therefore, optimizations are required for emergency scheduling in multimodal services.

In some embodiments, reporting of Delay Status Reporting (DSR) is introduced, whereby the terminal can report DSR which carries information related to the delay of data transmission, for example, information on that an uplink data packet has a remaining time less than a certain threshold due to the uplink data being not scheduled for a prolonged time. The remaining time of the data packet is the time remaining until the packet is discarded. For example, the remaining time can be determined based on a Packet Data Convergence Protocol (PDCP) discard timer.

In some embodiments, threshold-based DSR reporting is supported, for example, the DSR reporting is triggered when the remaining delay of a Packet Data Unit (PDU) or a PDU set is below a network configured threshold. For example, the threshold can be configured per Logical Channel Group (LCG).

In some embodiments, multiple data packets may form a PDU set or a packet set due to certain dependency between them.

In some embodiments, the PDCP discard timer for the PDU set supports cases where PDUs of a PDU set arrive at different instances of time.

In some embodiments, the network can configure the terminal whether to trigger delay status reporting, for example, if certain thresholds are set per LCG.

In some embodiments, when the terminal triggers reporting delay information for a LCG, the terminal also reports the buffer status associated with the remaining time.

In some embodiments, for the purpose of Media Access Control (MAC) buffer status reporting, the transmitting PDCP entity shall consider the following data as PDCP data volume:
PDCP Service Data Units (SDUs) for which no PDCP Data PDUs have been constructed;
PDCP data PDUs that have not been submitted to lower layers;
PDCP control PDUs;
for Acknowledged Mode Data Radio Bearer (AM DRB), the retransmitted PDCP SDUs; and
for AM DRB, the retransmitted PDCP data PDUs.

For the purpose of MAC delay status reporting, the transmitting PDCP entity shall consider the following data as delay-critical PDCP data volume: PDCP SDUs for which the remaining discard timer values are less than a threshold.

In some embodiments, in PDCP, when the remaining time of a data packet in a service data unit (SDU) is less than the threshold, DSR reporting will be triggered. However, specific details regarding a buffer size for the data volume reporting are not yet defined. For example, with the introduction of the packet set concept, packet discard based on packet sets has been introduced. That is, if the discard timer of any data packet in a packet set expires, the entire packet set will be discarded. Therefore, for a packet set, when one data packet in the packet set triggers DSR, it is necessary to consider whether the data volume of the entire packet set should be considered in the data volume reporting, so as to facilitate the base station to make a more accurate judgment on the urgency of its scheduling.

FIG. 2a is an interactive schematic diagram of a communication method according to an embodiment of the present disclosure. As shown in FIG. 2a, the embodiment of the present disclosure relates to a communication method for a communication system 100, the method including:
**Step S2101:** a network device sends second information to a terminal.

In some embodiments, the terminal receives the second information sent by the network device.

In some embodiments, the second information indicates that a remaining time of a first data packet to be transmitted in a packet set is less than or equal to a time threshold, and all data packets to be transmitted in the packet set to which the first data packet to be transmitted belongs are associated data packets to be transmitted.

In some embodiments, the second information indicates that the remaining time of the first data packet to be transmitted in the packet set is less than or equal to the time threshold, and the first data packet to be transmitted is the associated data packet to be transmitted.

In some embodiments, the second information indicates that the remaining time of a data packet to be transmitted that arrives first in the packet set is less than or equal to the time threshold, and all data packets to be transmitted in the packet set to which the data packet to be transmitted that arrives first belongs are the associated data packets to be transmitted.

In some embodiments, the first data packet to be transmitted is the data packet that arrives first in the packet set.

It should be noted that step S2101 can be omitted in the case where the terminal determines the associated data packet to be transmitted based on protocol rule information.

**Step S2102:** the terminal determines the associated data packet to be transmitted.

In some embodiments, the associated data packet to be transmitted is a single data packet to be transmitted. For example, the associated data packet to be transmitted is the first data packet to be transmitted.

In some embodiments, the associated data packets to be transmitted are data packets to be transmitted that are determined based on a packet set, the packet set including at least one data packet to be transmitted. For example, the associated data packets to be transmitted are the first data packet to be transmitted in the packet set and a second data packet to be transmitted that has dependency on the first data packet to be transmitted in the packet set.

In some embodiments, the associated data packet to be transmitted is a data packet that has dependency on the first data packet to be transmitted.

In some embodiments, the associated data packet to be transmitted is a data packet that has dependency on the first data packet to be transmitted. For the dependency, data packets within the same packet set can be considered, i.e., only dependency within the packet set is considered, or data packets that belong to other packet sets different from the packet set of the first data packet to be transmitted are considered, i.e., considering dependency between packet sets.

In some embodiments, the associated data packet to be transmitted may be a second data packet to be transmitted in the packet set that has dependency on the first data packet to be transmitted.

In some embodiments, the terminal determines the associated data packet to be transmitted based on protocol rule information.

In some embodiments, the terminal determines the associated data packet to be transmitted based on network configured information.

In some embodiments, the terminal determines that the remaining time of the first data packet to be transmitted in the packet set is less than or equal to the time threshold, and determines that all data packets to be transmitted in the packet set to which the first data packet to be transmitted belongs are the associated data packets to be transmitted.

In some embodiments, the remaining time of the first data packet to be transmitted in the packet set is less than or equal to the time threshold, and the first data packet to be transmitted is the associated data packet to be transmitted.

In some embodiments, the first data packet to be transmitted is any data packet in the packet set.

In some embodiments, the first data packet to be transmitted is a data packet that arrives first in the packet set.

In some embodiments, the terminal determines that the remaining time of the data packet to be transmitted that arrives first in the packet set is less than or equal to the time threshold, and determines that all data packets to be transmitted in the packet set to which the data packet to be transmitted that arrives first belongs are the associated data packets to be transmitted.

In some embodiments, the terminal determines the associated data packet to be transmitted based on the received second information.

In some embodiments, the terminal determines that the network configures a packet-set-based packet discarding method, and determines that the protocol rule information and/or the network configured information take effect.

In some embodiments, the associated data packet to be transmitted is a PDCP Service Data Unit (SDU) and/or a PDCP Packet Data Unit (PDU) associated with the PDCP Service Data Unit (SDU).

In some embodiments, the SDU may be a PDCP SDU that has not been assembled, and the remaining time of the PDCP SDU is less than the time threshold.

In some embodiments, the PDU may be an assembled data PDU (e.g., PDCP Data PDU) that has not been transmitted to the lower layer (a protocol lower layer, such as RLC) and the remaining time corresponding to the data PDU is less than the time threshold.

In some embodiments, for the AM mode, the SDU includes a PDCP SDU in a reconstruction process, a data recovery process, or an uplink handover process, and the remaining time of the SDU is less than the time threshold.

In some embodiments, for the AM mode, the PDU includes a PDCP data PDU (e.g., PDCP Data PDU) in the reconstruction process, data recovery process, or uplink handover process, and the remaining time of the PDU is less than the time threshold.

In some embodiments, since the SDU is a data packet received from a higher layer and is associated with a discard timer, the SDU is processed by the PDCP layer into a PDCP Data PDU, and in this case, the remaining time corresponding to the PDCP Data PDU is obtained from the discard timer of the associated SDU.

It should be noted that the data packet to be transmitted can be a PDCP data PDU. The remaining time of a PDCP data PDU being less than the time threshold can be understood as that the remaining time of a PDCP SDU corresponding to the PDCP data PDU is less than the time threshold.

**Step S2103:** the terminal determines first information.

In some embodiments, the first information for the DSR of the PDCP layer is determined.

In some embodiments, the first information indicates a first data volume.

In some embodiments, the first data volume may be an associated data volume, where the data volume determined based on the associated data to be transmitted may be the associated data volume.

In some embodiments, the first data volume is a data volume of a data packet to be transmitted having a remaining time less than or equal to a time threshold.

In some embodiments, the data volume can be a buffer size of a buffer.

In some embodiments, the first data volume is a data volume of a data packet to be transmitted that has a remaining time less than or equal to the time threshold and that is determined from the associated data packets to be transmitted.

In some embodiments, the remaining time is the time remaining until the data packet to be transmitted is discarded in a logical channel.

In some embodiments, the remaining time is the time remaining until the data packet to be transmitted is discarded in a logical channel group.

In some embodiments, the remaining time is the time remaining until a data packet set to be transmitted is discarded in a logical channel.

In some embodiments, the remaining time is the time remaining until the data packet set to be transmitted is discarded in a logical channel group.

In some embodiments, the PDCP layer may be the PDCP layer of the terminal.

**Step S2104:** the terminal sends the first information to the network device.

In some embodiments, the term "information" can be used interchangeably with terms such as "message", "signal", "signaling", "report", "configuration", "indication", "instruction", "command", "channel", "parameter", "field", or "data."

In some embodiments, the term "sending" can be used interchangeably with terms such as "transmitting", "reporting", or "transmission."

The information indication method involved in the embodiments of the present disclosure can include at least one of steps S2101 to S2104. For example, step S2101 can be implemented as an independent embodiment, step S2102 can be implemented as an independent embodiment, step S2103 can be implemented as an independent embodiment, and step S2104 can be implemented as an independent embodiment. For example, a combination of step S2102 with steps S2103 and S2104 can be implemented as an independent embodiment, and a combination of step S2103 with step S2104 can be implemented as an independent embodiment, but it is not limited thereto.

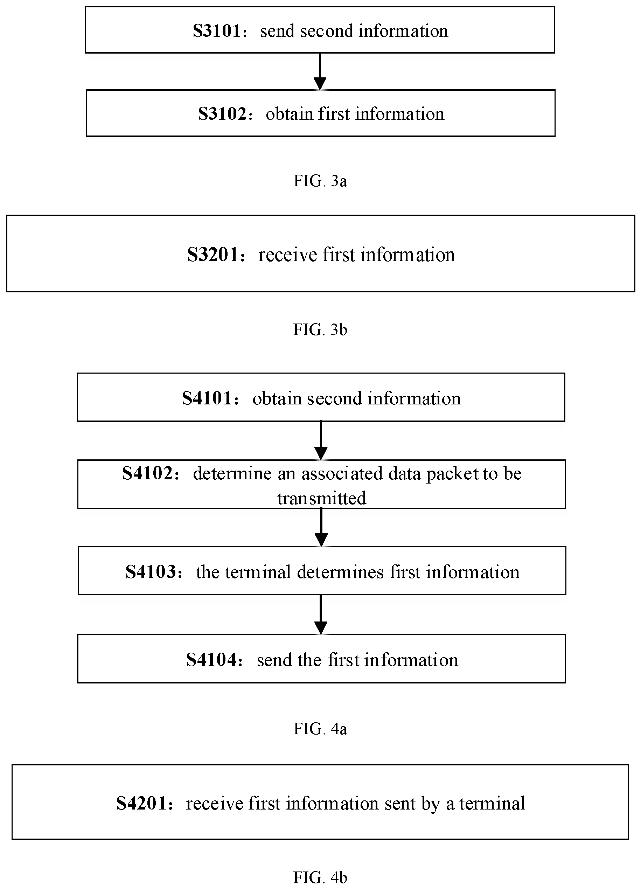

FIG. 3a is a schematic flowchart illustrating a communication method according to an embodiment of the present disclosure. As shown in FIG. 3a, the embodiment of the present disclosure relates to a communication method performed by a network device, the method including:

**Step S3101:** sending second information.

In some embodiments, for optional implementations of step S3101, reference can be made to optional implementations of step S2101 in FIG. 2a and other related parts in the embodiments involved in FIG. 2a, which will not be repeated here.

**Step S3102:** obtaining first information.

In some embodiments, the network device receives the first information sent by the terminal, but it is not limited thereto; the network device may also receive the first information sent by other entities.

In some embodiments, the network device obtains the first information specified by a protocol.

In some embodiments, the network device obtains the first information from the upper layer(s).

In some embodiments, the network device obtains the first information by processing.

In some embodiments, step S3102 is omitted, and the terminal autonomously implements the function indicated by the first information, or the above function is default or by default.

In some embodiments, for optional implementations of step S3102, reference can be made to the optional implementations of step S2104 in FIG. 2a and other related parts in the embodiments involved in FIG. 2a, which will not be repeated here.

The information indication method involved in the embodiments of the present disclosure can include at least one of steps S3101 to S3102. For example, step S3101 can be implemented as an independent embodiment, and step S3102 can be implemented as an independent embodiment, but it is not limited thereto.

FIG. 3b is a schematic flowchart illustrating a communication method according to an embodiment of the present disclosure. As shown in FIG. 3b, the embodiment of the present disclosure relates to a communication method performed by a network device, the method including:

**Step S3201:** receiving first information sent by a terminal.

In some embodiments, the first information is information determined for Delay Status Reporting (DSR) of a Packet Data Convergence Protocol (PDCP) layer; the first information indicates a first data volume; the first data volume is a data volume of a data packet to be transmitted that has a remaining time less than or equal to a time threshold and that is determined from an associated data packet to be transmitted; the remaining time is the time remaining until the data packet to be transmitted is discarded in a logical channel.

In some embodiments, for optional implementations of step S3201, reference can be made to the optional implementations of step S2104 in FIG. 2a and other related parts in the embodiments involved in FIG. 2a, which will not be repeated here.

In some embodiments, the associated data packet to be transmitted is a data packet to be transmitted determined based on a packet set, the packet set including at least one data packet to be transmitted.

In some embodiments, the method includes one of the following:
determining the associated data packet to be transmitted based on protocol rule information; and
determining the associated data packet to be transmitted based on network configured information.

In some embodiments, determining the associated data packet to be transmitted based on the protocol rule information includes:
determining that the remaining time of a first data packet to be transmitted in a packet set is less than or equal to a time threshold, and determining all data packets to be transmitted in the packet set to which the first data packet to be transmitted belongs are the associated data packets to be transmitted.

In some embodiments, determining the associated data packet to be transmitted based on the network configured information includes:
receiving second information sent by the network device; and
determining the associated data packet to be transmitted based on the second information.

In some embodiments, the second information indicates one of the following:
the remaining time of the first data packet to be transmitted in the packet set is less than or equal to the time threshold, and all data packets to be transmitted in the packet set to which the first data packet to be transmitted belongs are the associated data packets to be transmitted; and
the remaining time of the first data packet to be transmitted in the packet set is less than or equal to the time threshold, and the first data packet to be transmitted is the associated data packet to be transmitted.

In some embodiments, the method further includes:
determining that the network configures a packet-set-based packet discard method, and the protocol rule information and/or the network configured information take effect.

In some embodiments, the method further includes:
sending the first information to the network device.

In some embodiments, the associated data packet to be transmitted is a PDCP Service Data Unit (SDU) and/or a PDCP Packet Data Unit (PDU) associated with the PDCP SDU.

FIG. 4a is a schematic flowchart illustrating a communication method according to an embodiment of the present disclosure. As shown in FIG. 4a, the embodiment of the present disclosure relates to a communication method performed by a terminal, the method including:
**Step S4101**: obtain second information.

In some embodiments, the terminal obtains the second information sent by an access network device, but it is not limited thereto; the terminal may also receive the second information sent by other entities.

In some embodiments, the terminal obtains the second information specified by the protocol.

In some embodiments, the terminal obtains the second information from the upper layer(s).

In some embodiments, the terminal obtains the second information by performing processing.

In some embodiments, step S4101 is omitted, and the terminal autonomously implements the function indicated by the second information, or the above function is defaulted or a default.

In some embodiments, for optional implementations of step S4101, reference can be made to the optional implementations of step S2101 in FIG. 2a and other related parts in the embodiments involved in FIG. 2a, which will not be repeated here.

**Step S4102**: determine an associated data packet to be transmitted.

In some embodiments, for optional implementations of step S4102, reference can be made to the optional implementations of step S2102 in FIG. 2a and other related parts in the embodiments involved in FIG. 2a, which will not be repeated here.

**Step S4103**: the terminal determines first information.

In some embodiments, for optional implementations of step S410, reference can be made to the optional implementations of step S2103 in FIG. 2a and other related parts in the embodiments involved in FIG. 2a, which will not be repeated here.

**Step S4104**: send the first message.

In some embodiments, for optional implementations of step S4104, reference can be made to the optional implementations of step S2104 in FIG. 2a and other related parts in the embodiments involved in FIG. 2a, which will not be repeated here.

The information indication method involved in the embodiments of the present disclosure can include at least one of steps S4101 to S4104. For example, step S4101 can be implemented as an independent embodiment, step S4102 can be implemented as an independent embodiment, step S4103 can be implemented as an independent embodiment, and step S4104 can be implemented as an independent embodiment. For example, a combination of step S4102 with steps S4103 and S4104 can be implemented as an independent embodiment, and a combination of step S4103 with step S4104 can be implemented as an independent embodiment, but it is not limited thereto.

FIG. 4b is a schematic flowchart illustrating a communication method according to an embodiment of the present disclosure. As shown in FIG. 4b, the embodiment of the present disclosure relates to a communication method performed by a terminal, the method including:
**Step S4201**: receiving first information sent by a terminal.

In some embodiments, the first information is information determined for a Delay Status Reporting (DSR) of a Packet Data Convergence Protocol (PDCP) layer; the first information indicates a first data volume; the first data volume is a data volume of a data packet to be transmitted that has a remaining time less than or equal to a time threshold and that is determined from the associated data packet to be transmitted; and the remaining time is the time remaining until the data packet to be transmitted is discarded in a logical channel.

In some embodiments, for optional implementations of step S4201, reference can be found to the optional implementations of step S2104 in FIG. 2a and other related parts in the embodiments involved in FIG. 2a, which will not be repeated here.

In some embodiments, the method further includes:
sending second information to the terminal;
where the second information is used to determine the associated data packet to be transmitted.

In some embodiments, the second information indicates one of the following:
the remaining time of a first data packet to be transmitted in a packet set is less than or equal to the time threshold, and all data packets to be transmitted in the packet set to which the first data packet to be transmitted belongs are the associated data packets to be transmitted; and
the remaining time of the first data packet to be transmitted in the packet set is less than or equal to the time threshold, and the first data packet to be transmitted is the associated data packet to be transmitted.

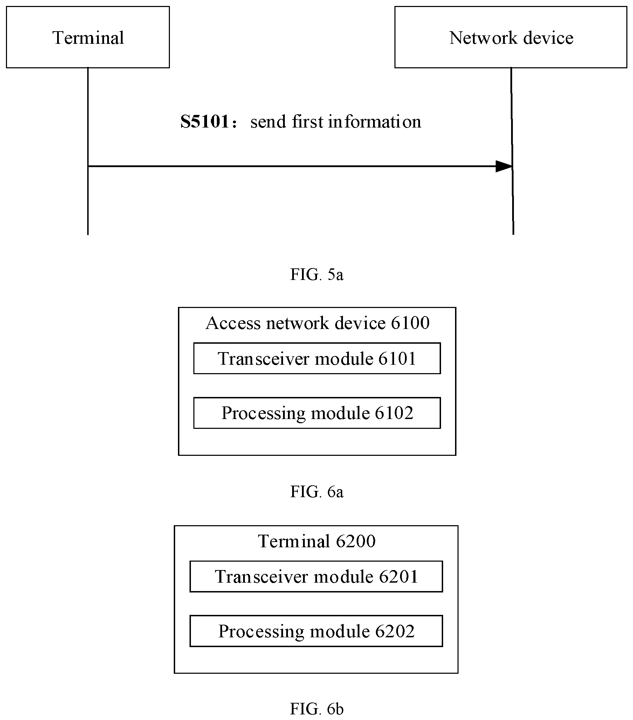

FIG. 5a is an interactive schematic diagram of a communication method according to an embodiment of the present disclosure. As shown in FIG. 5a, the present disclosure relates to a communication method for a communication system 100, the method including one of the following steps:
**step S5101**: a terminal sends first information to a network device.

In some embodiments, the first information is information determined for a Delay Status Reporting (DSR) of a Packet Data Convergence Protocol (PDCP) layer; the first information indicates a first data volume; the first data volume is a data volume of a data packet to be transmitted that has a remaining time less than or equal to a time threshold and that is determined from an associated data packet to be transmitted; and the remaining time is the time remaining until the data packet to be transmitted is discarded in a logical channel.

For optional implementations of step S5101, reference can be made to the optional implementations of steps S2101 to S2104 in FIG. 2a, and other related parts in the embodiments involved in FIG. 2a, which will not be repeated here.

In some embodiments, the above methods may include methods on a terminal side, on a network device side, etc., which will not be repeated here.

In some embodiments, a scheme for Delayed Status Reporting (DSR) is provided.

In some embodiments, the terminal detects that a specific data packet or data packet set exists in a logical channel or a logical channel group, and the specific data packet or data packet set has a remaining time less than a predetermined threshold.

In some embodiments, a PDCP layer determines an associated data volume of DSR reporting based on protocol agreements or network configured rules.

In some embodiments, the DSR associated data volume (corresponding to the first data volume) is a data volume of the associated data packets having the remaining time less than the threshold (including equal to the threshold), that is calculated by the PDCP layer.

In some embodiments, the remaining time can be the time remaining until the discard timer (discardTimer) expires. It is because after the discardTimer expires, the data packet will not have another chance to be transmitted and will be discarded.

In some embodiments, the PDCP layer determines the size of the associated data volume reported by DSR based on the rules specified in the protocol. The DSR associated data volume (corresponding to the first data volume) is the data volume of the associated data packets having the remaining time less than the threshold, as calculated by the PDCP layer.

There are two methods for counting the associated data packets:
Method 1: counting only individual data packets without considering the dependency between the data packets (or data packets to be transmitted) and data packets in the data packet set;
   for example:
   when the PDCP layer determines that a remaining discardTimer value of any data packet in a packet set is less than a time threshold, the PDCP layer only needs to count the data volume of that packet as the associated data volume reported by DSR when determining the size of the associated data volume reported by DSR.
Method 2: considering the dependency between the data packets and data packets in a packet set or across the packet sets, and determining some and/or all of the data packets in the data packet set.

In some embodiments, when the PDCP layer determines that the remaining discardTimer value of any data packet in a packet set is less than a time threshold, the PDCP layer needs to count the data volume of all packets in the packet set to which the data packet belongs as the associated data volume reported by DSR when determining the size of the associated data volume reported by DSR.

In some embodiments, when the PDCP layer determines that the remaining discardTimer value of a data packet arriving first in a packet set is less than a time threshold, the PDCP layer needs to count the data volume of all data packets in the packet set to which the data packet belongs as the associated data volume reported by DSR when determining the size of the associated data volume reported by DSR.

In method 2, if the dependency between the data packets and data packets in a packet set or across the packet sets is considered, when the PDCP layer determines that a first packet (i.e., any data packet or the very first data packet) in a Packet Set has a remaining discardTimer value less than a time threshold, it can be interpreted as that the remaining discardTimer values of all the data packets that have the dependency are considered to be less than the time threshold (even if some packets arrive later, and their actual remaining discardTimer values are not less than the time threshold). These packets with the remaining discardTimer values being considered to be less than the time threshold are counted as the associated data volume reported by DSR.

In some embodiments, when the network configures packet discarding at a packet set level, the above rules take effect. That is, when the PDCP layer determines the size of the associated data volume reported by DSR, it needs to count the total data volume of all packets in the packet set to which this data packet belongs as the associated data volume reported by DSR.

In some embodiments, if pdu-SetDiscard is configured, when the PDCP layer determines that the remaining discardTimer value of any data packet in a packet set is less than the time threshold, the PDCP layer needs to count the data volume of all packets in the packet set to which this data packet belongs as the associated data volume reported by DSR when determining the size of the associated data volume reported by DSR.

In some embodiments, if PDU set discarding (pdu-SetDiscard) is configured, when the PDCP layer determines that the remaining discardTimer value of a data packet arriving first in a packet set is less than the time threshold, the PDCP layer needs to count the data volume of all packets in the packet set to which this data packet belongs as the associated data volume reported by DSR when determining the size of the associated data volume reported by DSR.

In some embodiments, the PDCP layer determines the associated data volume reported by DSR based on the network configured rules.

In some embodiments, the network configures the terminal such that when the PDCP layer determines that the remaining discardTimer value of any data packet in a packet set is less than the time threshold, the PDCP layer can count the data volume of all packets in the packet set to which this data packet belongs as the associated data volume reported by DSR when determining the size of the associated data volume reported by DSR.

In some embodiments, the network configures the terminal such that when the PDCP layer determines that the remaining discardTimer value of a data packet arriving first in a packet set is less than the time threshold, the PDCP layer can count the data volume of all data packets in the packet set to which this data packet belongs as the associated data volume reported by DSR when determining the size of associated data volume reported by DSR.

In some embodiments, the network configures and only indicates the terminal to count the data volume of this data packet as the associated data volume reported by DSR.

In some embodiments, the PDCP layer determines the size of the associated data volume reported by DSR.

In some embodiments, with method 1 or method 2, after the PDCP layer determines the associated data packet(s) for the DSR reporting (which may include one data packet or multiple data packets, i.e., the data packet(s) belonging to the same data set or different data sets and having the dependency in method 2, i.e., the associated data packet(s) calculated by the PDCP layer may be a list), it is considered that the remaining discardTimer value of one or each data packet (PDCP SDU) in (the list of) the associated data packets calculated by the PDCP layer is less than the time threshold, and when the PDCP layer determines the size of the associated data volume reported by DSR, it counts the SDU and/or the PDCP data PDU associated with the SDU.

It should be noted that in the following embodiments, the first data volume is the data volume that needs to be counted to implement DSR, and the second data volume is the data volume that needs to be counted to implement BSR.

In some embodiments:
for the purpose of Media Access Control (MAC) Buffer Status Reporting (BSR), the transmitting PDCP entity shall consider at least one of the following data as PDCP data volume (corresponding to the second data volume):
PDCP Service Data Units (SDUs) for which no PDCP Data PDUs have been constructed;
PDCP data PDUs that have not been submitted to lower layers;
PDCP controls PDUs;
for Acknowledged Mode Data RadioBearer (AM DRB), the retransmitted PDCP SDUs; and
for AM DRB, the retransmitted PDCP data PDUs.

In some embodiments:
for the purpose of MAC delay status reporting, the transmitting PDCP entity shall consider the following data as delay-critical PDCP data volume or the DSR associated data volume (the first data volume): PDCP SDUs for which the remaining discard timer (discardTimer) values are less than a threshold and the corresponding PDCP data PDUs are counted as the first data volume.

In some embodiments, if pdu-SetDiscard is configured, when the remaining discardTimer value is less than a time threshold for a PDCP SDU, the transmitting PDCP entity shall take all PDCP SDUs belonging to the PDU set along with the corresponding PDCP data PDUs into consideration when calculating the delay-critical PDCP data volume or the DSR associated data volume, that is, the volume of these data is counted as the first data volume.

In some embodiments, for the purpose of MAC delay status reporting, the transmitting PDCP entity shall consider at least one of the following data as the delay-critical PDCP data volume or the DSR associated data volume (corresponding to the first data volume):
PDCP SDUs for which no PDCP data PDUs have been constructed and for which the remaining discardTimer values are less than a time threshold;
PDCP data PDUs that have not been submitted to lower layers and for which the remaining discardTimer values are less than a time threshold; it should be noted that the lower layers in the present disclosure correspond to lower protocol layers of the protocol stack.

For AM DRB, the PDCP SDUs which will be retransmitted and for which the remaining discardTimer values are less than a time threshold; and
for AM DRB, the PDCP data PDUs will be retransmitted and for which the remaining discardTimer values are less than a time threshold.

The remaining discardTimer value being less than the time threshold mentioned above can include that the actual discardTimer value is less than the time threshold; or the discardTimer value can be considered as being less than the time threshold. For example, as explained above, among the data packets having the dependency, some data packets may arrive later and their discardTimer values may not be less than the time threshold; however, because some of these data packets have discardTimer values less than the time threshold, all the data packets having the dependency are considered to have the discardTimer values less than the time threshold.

In some embodiments, the remaining discardTimer value (corresponding to the remaining time) of a PDCP data PDU being less than the time threshold can be interpreted as that the remaining discardTimer value of the PDCP SDU corresponding to the PDCP data PDU is less than the time threshold.

In some embodiments, for a MAC entity, if it detects that multiple data packets on a logical channel have remaining discardTimer values (corresponding to the remaining time) less than a time threshold, in DSR reporting, the delay information (Delay info) reported by DSR of the MAC entity is calculated according to the protocol agreement, for example, determined by calculating the minimum, maximum, or average of the remaining discardTimer values of the multiple data packets. For example, on a logical channel, two data packets have remaining discardTimer values (corresponding to the remaining time) that are both less than the time threshold (10 ms), data packet 1 has the remaining discardTimer value (corresponding to the remaining time) of 2 ms, and data packet 2 has the remaining discardTimer value (corresponding to the remaining time) of 5 ms, and then in the final DSR reporting, reporting to the network can be based on the minimum of 2 ms (the minimum remaining time for all data packets), even though the data volume reported in this case is the sum of the data volumes of all the data packets having remaining discardTimer values (corresponding to the remaining time) less than the time threshold. For example, reporting 5ms is reporting based on the larger value, while reporting 3.5ms is reporting based on the average value.

In some embodiments, for a MAC entity, if it detects that multiple data packets on multiple logical channels of a logical channel group have remaining discardTimer values (corresponding to the remaining time) less than the time threshold, then in DSR reporting, the delay information (Delay info) reported by DSP of the MAC entity is calculated according to the protocol agreements, for example, determined by calculating the minimum, maximum, or average of the remaining discardTimer values of the multiple data packets across the logical channels. For example, if a data packet on one logical channel has a remaining discardTimer value (corresponding to the remaining time) less than the time threshold (10 ms), and the remaining discardTimer value (corresponding to the remaining time) is 2 ms, and meanwhile, a data packet 2 on another logical channel has a remaining discardTimer value (corresponding to remaining time) of 5 ms, then in the final DSR reporting, reporting to the network can be based on the minimum of 2 ms (the minimum remaining time for all the data packets), even though the data volume reported in this case is the sum of the data volumes of all the data packets having the remaining discardTimer values (corresponding to the remaining time) less than the time threshold. For example, reporting 5ms is reporting based on the larger value, while reporting 3.5ms is reporting based on the average value.

The embodiments of the present disclosure also provide an apparatus for implementing any of the above methods. For example, an apparatus is provided that includes units or modules configured to implement the steps performed by the terminal in any of the above methods. For another example, another apparatus is provided that includes units or modules configured to implement the steps performed by the network device (e.g., an access network device, or a core network device) in any of the above methods.

It should be understood that the division of units or modules in the above apparatuses is only a logical functional division, and in actual implementations, they may be fully or partially integrated into a single physical entity, or they may be physically separated. Furthermore, the units or modules in the apparatus may be implemented in the form of a processor invoking software: for example, the apparatus includes a processor connected to a memory storing instructions, and the processor invokes the instructions stored in the memory to implement any of the above-mentioned methods or the functions of the various units or modules in the above-mentioned apparatus. The processor is, for example, a general-purpose processor, such as a Central Processing Unit (CPU) or a microprocessor, and the memory is a memory internal or external to the apparatus. Alternatively, the units or modules in the apparatus may be implemented in the form of hardware circuits, and the functionality of some or all of the units or modules may be realized by designing the hardware circuits, which can be understood as one or more processors. For example, in an implementation, the hardware circuit is an application-specific integrated circuit (ASIC), and the functionality of some or all of the units or modules may be realized by designing the logical relationships between the components within the circuit. For another example, in another implementation, the hardware circuit may be implemented by programmable logic devices (PLDs), such as a field-programmable gate array (FPGA), which may include a large number of logic gate circuits, and the connection relationships between the logic gate circuits are configured through configuration files, thereby achieving the functionality of some or all of the units or modules. All units or modules of the above apparatuses can be implemented entirely in the form of a processor invoking software, entirely in the form of hardware circuits, or partially by a processor invoking software with the remainder implemented by hardware circuits.

In the embodiments of the present disclosure, the processor is a circuit with signal processing capabilities. In an implementation, the processor can be a circuit with capabilities of reading and executing instructions, such as a Central Processing Unit (CPU), a microprocessor, a graphics processing unit (GPU) (which can be understood as a microprocessor), or a digital signal processor (DSP). In another implementation, the processor can implement certain functions through the logical relationships of hardware circuits, where the logical relationships of the hardware circuits are fixed or reconfigurable. For example, the processor is a hardware circuit implemented through an application-specific integrated circuit (ASIC) or programmable logic devices (PLDs), such as an FPGA. In the reconfigurable hardware circuit, the process of the processor loading a configuration file and implementing hardware circuit configuration can be understood as the process of the processor loading instructions to implement the functions of some or all of the above units or modules. Furthermore, the processor can also be a hardware circuit designed for artificial intelligence, which can be understood as an ASIC, such as a Neural Network Processing Unit (NPU), a Tensor Processing Unit (TPU), a Deep Learning Processing Unit (DPU), etc.

FIG. 6a is a schematic structural diagram of a network device provided in an embodiment of the present disclosure. As shown in FIG. 6a, the network device 6100 includes: a transceiver module 6101 and a processing module 6102; the transceiver module 6101 is configured to send information; and the processing module 6102 is configured to perform operations. Optionally, the transceiver module 6101 is configured to perform the steps related to information transmission and reception performed by the network device 6100 in any of the above communication methods, which will not be repeated here. Optionally, the processing module 6102 is configured to perform the steps related to information processing performed by the network device in any of the above communication methods, which will not be repeated here.

FIG. 6b is a schematic structural diagram of a terminal provided in an embodiment of the present disclosure. As shown in FIG. 6b, the terminal 6200 includes: a transceiver module 6201 and a processing module 6202; the transceiver module 6201 is configured to receive information; and the processing module 6202 is configured to perform operations. Optionally, the transceiver module 6201 is configured to perform the steps related to information transmission and reception performed by the terminal 6200 in any of the above communication methods, which will not be repeated here. Optionally, the processing module 6202 is configured to perform the steps related to information processing performed by the terminal in any of the above communication methods, which will not be repeated here.

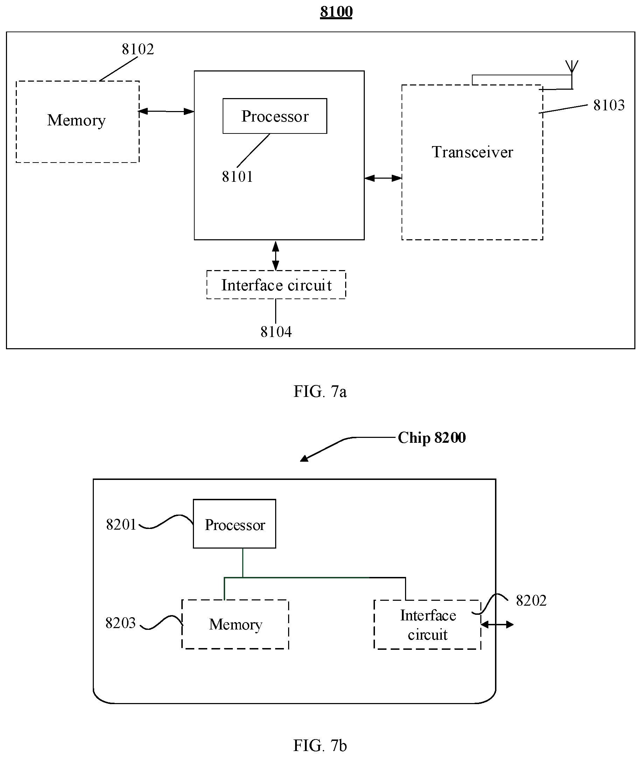

FIG. 7a is a schematic structural diagram of a communication device 8100 provided in an embodiment of the present disclosure. The communication device 8100 can be a network device (e.g., an access network device or a core network device), a terminal (e.g., a user equipment), a chip, chip system, or processor that supports the network device in implementing any of the above methods, or a chip, chip system, or processor that supports the terminal in implementing any of the above information indication methods. The communication device 8100 can be configured to implement the information indication methods described in the above method embodiments; for details, please refer to the descriptions in the above method embodiments.

As shown in FIG. 7a, the communication device 8100 includes one or more processors 8101. The processor 8101 can be a general-purpose processor or a dedicated processor, such as a baseband processor or a central processor. The baseband processor can be configured to process communication protocols and communication data, while the central processor can be configured to control communication apparatuses (e.g., a base station, a baseband chip, a terminal device, a terminal device chip, a DU, a CU, or the like), execute programs, and process program data. The processor 8101 is configured to invoke instructions to cause the communication device 8100 to perform any of the above communication methods.

In some embodiments, the communication device 8100 further includes one or more memories 8102 for storing instructions. Optionally, all or part of the memories 8102 can also be located outside the communication device 8100.

In some embodiments, the communication device 8100 further includes one or more transceivers 8103. When the communication device 8100 includes one or more transceivers 8103, the communication steps such as sending and/or receiving in the above methods are performed by the transceivers 8103, and other steps are performed by the processor 8101.

In some embodiments, the transceiver can include a receiver and a transmitter, and the receiver and the transmitter can be separate or integrated. Optionally, the terms transceiver, transceiving unit, transceiving machine, transceiving circuit, etc., can be used interchangeably; the terms transmitter, transmitting unit, transmitting machine, transmitting circuit, etc., can be used interchangeably; and the terms receiver, receiving unit, receiving machine, receiving circuit, etc., can be used interchangeably.

Optionally, the communication device 8100 further includes one or more interface circuits 8104, which are connected to the memory 8102. The interface circuits 8104 can be configured to receive signals from the memory 8102 or other devices, and can be configured to send signals to the memory 8102 or other devices. For example, the interface circuits 8104 can read instructions stored in the memory 8102 and send the instructions to the processor 8101.

The communication device 8100 described in the above embodiments can be a network device or a terminal, but the scope of the communication device 8100 described in the present disclosure is not limited thereto, and the structure of the communication device 8100 may not be limited by FIG. 7a. The communication device can be a separate device or may be part of a larger device. For example, the communication device can be: (1) an independent integrated circuit IC, or chip, or chip system or subsystem; (2) a collection of one or more ICs, optionally, the IC collection may also include a storage component for storing data and programs; (3) an ASIC, such as a modem; (4) a module that can be embedded in other devices; (5) a receiver, a terminal device, a smart terminal device, a cellular phone, a wireless device, a handheld device, a mobile unit, an in-vehicle device, a network device, a cloud device, an artificial intelligence device, etc.; and (6) others, etc.

FIG. 7b is a schematic structural diagram of a chip 8200 provided in an embodiment of the present disclosure. For cases where the communication device 8100 can be a chip or a chip system, please refer to the schematic structural diagram of the chip 8200 shown in FIG. 7b, but it is not limited thereto.

The chip 8200 includes one or more processors 8201, and the processors 8201 are configured to invoke instructions to cause the chip 8200 to perform any of the above communication methods.

In some embodiments, the chip 8200 further includes one or more interface circuits 8202 which are connected to the memory 8203. The interface circuits 8202 can be configured to receive signals from memory 8203 or other devices, and the interface circuits 8202 can be configured to send signals to memory 8203 or other devices. For example, the interface circuit 8202 can read instructions stored in the memory 8203 and send the instructions to the processor 8201. Optionally, terms such as interface circuit, interface, transceiver pin, and transceiver can be used interchangeably.

In some embodiments, the chip 8200 further includes one or more memories 8203 for storing instructions. Optionally, all or part of the memories 8203 can be located outside the chip 8200.

The present disclosure also provides a storage medium storing instructions that, when executed on a communication device 8100, cause the communication device 8100 to perform any of the methods described above. Optionally, the storage medium is an electronic storage medium. Optionally, the storage medium is a computer-readable storage medium, but it can also be a storage medium readable by other devices. Optionally, the storage medium can be a non-transitory storage medium, but it can also be a transitory storage medium.

The present disclosure also provides a program product which, when executed by the communication device 8100, causes communication device 8100 to perform any of the above communication methods. Optionally, the program product is a computer program product.

The present disclosure also provides a computer program that, when running on a computer, causes the computer to perform any of the above communication methods.

Other embodiments of the present disclosure will readily occur to those skilled in the art upon consideration of the specification and practice of the present disclosure disclosed herein. The present disclosure is intended to cover any variations, uses, or adaptations of the present disclosure that follow the general principles of the present disclosure and include common knowledge or conventional techniques in the art not disclosed herein. The description and embodiments are to be considered illustrative only, and the true scope and spirit of the present disclosure are indicated by the following claims.

It should be understood that the present disclosure is not limited to the precise structure described above and shown in the accompanying drawings, and various modifications and changes can be made without departing from the scope thereof. The scope of the present disclosure is limited only by the appended claims.

## Claims

1. A method for delay status reporting, performed by a terminal, the method comprising:
determining first information for Delay Status Reporting (DSR) of a Packet Data Convergence Protocol (PDCP) layer;
wherein the first information indicates a first data volume, and the first data volume is a data volume of a data packet to be transmitted that has a remaining time less than or equal to a time threshold.

2. The method according to claim 1, wherein the first data volume is the data volume of the data packet to be transmitted that has the remaining time less than or equal to the time threshold and that is determined from an associated data packet to be transmitted.

3. The method according to claim 2, wherein the associated data packet to be transmitted is a data packet to be transmitted that is determined based on a packet set, and the packet set comprises at least one data packet to be transmitted.

4. The method according to claim 2, wherein the method comprises one of:
determining the associated data packet to be transmitted based on protocol rule information; and
determining the associated data packet to be transmitted based on network configured information.

5. The method according to claim 4, wherein determining the associated data packet to be transmitted based on the protocol rule information comprises:
determining that a remaining time of a first data packet to be transmitted in a packet set is less than or equal to the time threshold, and determining that all data packets to be transmitted in the packet set to which the first data packet to be transmitted belongs are associated data packets to be transmitted.

6. The method according to claim 4, wherein determining the associated data packet to be transmitted based on the network configured information comprises:
receiving second information sent by a network device; and
determining the associated data packet to be transmitted based on the second information.

7. The method according to claim 6, wherein the second information indicates one of:
a remaining time of a first data packet to be transmitted in a packet set is less than or equal to the time threshold, and all data packets to be transmitted in the packet set to which the first data packet to be transmitted belongs are associated data packets to be transmitted; and
the remaining time of the first data packet to be transmitted in the packet set is less than or equal to the time threshold, and the first data packet to be transmitted is the associated data packet to be transmitted.

8. The method according to claim 5 or 6, wherein the method further comprises:
determining that a network configures a packet-set-based packet discarding mode, and determining that the protocol rule information and/or the network configured information take effect.

9. The method according to claim 1, wherein the method further comprises:
sending the first information to a network device.

10. The method according to claim 1, wherein the associated data packet to be transmitted is a PDCP Service Data Unit (SDU) and/or a PDCP Packet Data Unit (PDU) associated with the PDCP SDU.

11. A method for delay status reporting, performed by a network device, the method comprising:
receiving first information sent by a terminal;
wherein the first information is information determined for Delay Status Reporting (DSR) of a Packet Data Convergence Protocol (PDCP) layer; the first information indicates a first data volume; the first data volume is a data volume of a data packet to be transmitted that has a remaining time less than or equal to a time threshold; and the remaining time is a time remaining until the data packet to be transmitted is discarded in a logical channel.

12. The method according to claim 11, wherein the first data volume is the data volume of the data packet to be transmitted that has the remaining time less than or equal to the time threshold and that is determined from an associated data packet to be transmitted.

13. The method according to claim 12, wherein the associated data packet to be transmitted is a data packet to be transmitted determined based on a packet set, the packet set comprising at least one data packet to be transmitted.

14. The method according to claim 11, wherein the method further comprises:
sending second information to the terminal;
wherein the second information is used to determine the associated data packet to be transmitted.

15. The method according to claim 14, wherein the second information indicates one of:
a remaining time of a first data packet to be transmitted in a packet set is less than or equal to the time threshold, and all data packets to be transmitted in the packet set to which the first data packet to be transmitted belongs are the associated data packets to be transmitted; and
the remaining time of the first data packet to be transmitted in the packet set is less than or equal to the time threshold, and the first data packet to be transmitted is the associated data packet to be transmitted.

16. A method for delay status reporting, the method comprising:
sending, by a terminal, first information to a network device;
wherein the first information is the information determined for Delay Status Reporting (DSR) of a Packet Data Convergence Protocol (PDCP) layer; the first information indicates a first data volume; and the first data volume is a data volume of a data packet to be transmitted that has a remaining time less than or equal to a time threshold.

17. A terminal, the terminal comprising:
a processing module, configured to:
determine first information for Delay Status Reporting (DSR) of a Packet Data Convergence Protocol (PDCP) layer;
wherein the first information indicates a first data volume; and the first data volume is a data volume of a data packet to be transmitted that has a remaining time less than or equal to a time threshold.

18. A network device, the network device comprising:
a transceiver module, configured to:
receive first information sent by a terminal;
wherein the first information is information determined for Delay Status Reporting (DSR) of a Packet Data Convergence Protocol (PDCP) layer; the first information indicates a first data volume; and the first data volume is a data volume of a data packet to be transmitted that has a remaining time less than or equal to a time threshold.

19. A communication system, wherein the communication system comprises a terminal and a network device, the terminal is configured to perform the method according to any one of claims 1 to 10; and the network device is configured to perform the method according to any one of claims 11 to 15.

20. A terminal, the terminal comprising:
a memory, comprising executable instructions; and
one or more processors;
wherein the executable instructions, when being executed by the processors, cause the terminal to perform the method according to any one of claims 1 to 10.

21. A network device, the network device comprising:
a memory, comprising executable instructions; and
one or more processors;
wherein the executable instructions, when being executed by the processors, cause the network device to perform the method according to any one of claims 11 to 15.

22. A storage medium storing instructions that, when running on a communication device, cause the communication device to perform the method according to any one of claims 1 to 10 or claims 11 to 15.
